# EUROPÄISCHE PATENTSCHRIFT

(11) **EP 1 586 480 B1**
(45) Veröffentlichungstag und Bekanntmachung des Hinweises auf die Patenterteilung: **10.02.2016**
(21) Anmeldenummer: 05002739.0
(22) Anmeldetag: 10.02.2005
(51) Int. Cl.: B60L 5/39

(54) **Stromabnehmer**
Current collector
Capteur de courant

(30) Priorität: 16.04.2004 DE 102004019252
(43) Veröffentlichungstag der Anmeldung: 19.10.2005
(73) Patentinhaber: Stemmann-Technik GmbH, 48465 SchÀ¼ttorf (DE)
(72) Erfinder: Wilpsbäumer, Ulrich, Dipl.-Ing., 48356, Nordwalde (DE)
(74) Vertreter: Griepenstroh, Jörg

(56) Entgegenhaltungen:
- DD-A1- 136 942
- DE-A1- 3 012 992
- GB-A- 1 028 575
- JP-U- 57 104 701

## Beschreibung

Die Erfindung betrifft einen Stromabnehmer für eine dritte Schiene mit den Merkmalen im Oberbegriff des Patentanspruchs 1.

Es sind Stromabnehmer für eine dritte Schiene bekannt, bei denen ein schwenkbeweglich gelagerter Schwingarm mit einem Schleifschuh unter Einfluss einer Federkraft gegen die dritte Schiene gedrückt wird. Hierbei sind grundsätzlich drei unterschiedliche Stellungen des Schwingarms vorgesehen. In der Arbeitsstellung liegt der Schwingarm an der dritten Schiene an. Er kann insbesondere von unten gegen diese Schiene gedrückt werden. In Stromschienenlücken wird der Schwingarm entsprechend der maximal möglichen Auslenkung nach oben gezogen, bis er wieder mit einer dritten Schiene in Kontakt gelangt und in die Arbeitsstellung überführt wird. Zum Ablegen des Schwingarms kann dieser in eine Ruhestellung verlagert und in dieser arretiert werden.

Aus der DD 280 297 A 1 ist ein Stromabnehmer für eine dritte Schiene an Schienentriebfahrzeugen bekannt, bei dem das in drei Stellungen einsetzbare Schleifstück durch eine zusammengesetzte Schwenk- bzw. Ab- und Aufwärtsbewegung in eine Arbeits- bzw. Ruhestellung geklappt wird. Die Arretierung in der Ruhestellung erfolgt durch Rastvorrichtungen. Es ist bekannt, Rastvorrichtungen innerhalb bzw. außerhalb eines Druckluftantriebs anzuordnen. In der DD-PS 148 344 wird eine Lösung vorgeschlagen, bei welcher die Krafteinleitung in den Schleifschuh über eine Zugstange erfolgt, die parallel zur Kolbenbewegung angeordnet ist. Zur Arretierung der Zugstange dient eine Klinke mit Anlauffläche, die beim Schaltvorgang durch eine am Zahnsegment eingebrachte Rolle ausgeklinkt wird.

Die im Stand der Technik aufgezeigten Bauarten von Stromabnehmern für die dritte Schiene sind hinsichtlich des getriebetechnischen Aufbaus relativ aufwändig. Insbesondere Druckluftantriebe mit internen Rastvorrichtungen sind kostenintensiv und aufgrund der kompakten Bauform sehr schwer zu warten.

Hiervon ausgehend liegt der Erfindung die Aufgabe zugrunde, einen Stromabnehmer für eine dritte Schiene zu schaffen, der insbesondere hinsichtlich der Rastvorrichtung konstruktiv einfach, kostengünstig und wartungsarm ist.

Diese Aufgabe ist bei einem Stromabnehmer mit den Merkmalen des Patentanspruchs 1 dadurch gelöst, dass die Kolbenstange der Kolben-Zylinder-Einheit mit einem ersten Ende eines Koppelglieds verbunden ist, dessen zweites Ende schwenkbeweglich mit einem Klinkenhebel verbunden ist, der wiederum an einem Klinkenhebel-Schwenklager eines Grundrahmens des Stromabnehmers gelagert ist und unter dem Eifluss der Federkraft einer Klinkfeder in der Ruhestellung gehalten ist, wobei eine Klinke des Klinkenhebels in der Ruhestellung an einem Entklinkungszylinder anliegt, welcher den Klinkenhebel zum Entklinken so weit gegen die Federkraft der Klinkfeder verschwenkt, dass das zweite Ende des Koppelglieds eine Totlage durchfährt und von einer den Schwingarm mit dem Schleifschuh gegen die dritte Schiene pressenden Hauptfeder in die Arbeitsstellung verlagert wird.

Der wesentliche Vorteil dieser Rastvorrichtung ist, dass eine standardisierte und einfach aufgebaute Kolben-Zylinder-Einheit zum Einsatz kommen kann, die ohne jegliche interne Verrastung auskommt. Das Verrasten bzw. Verklinken des Schwingarms in der von der dritten Schiene abgehobenen Ruhestellung erfolgt durch einen außerhalb der Kolben-Zylinder-Einheit angeordneten Verklinkungsmechanismus, der zwei schwingende Gelenkglieder umfasst. Das eine Gelenkglied ist das Koppelglied, dessen erstes Ende mit der Kolben-Zylinder-Einheit verbunden ist und von dieser lediglich linear verschoben wird. Das zweite Ende dieses Koppelglieds ist schwenkbeweglich mit dem Klinkenhebel verbunden, der an dem Klinkenhebel-Schwenklager eines Grundrahmens des Stromabnehmers gelagert ist. Das zweite Ende des Koppeiglieds kann beiderseits der Totlagengeraden verschwenken, wobei die Totlage unter Einfluss der Federkraft der Klinkfeder durchfahren wird.

In der Ruhestellung soll der Schwingarm möglichst maximal von der dritten Schiene entfernt sein. Daher ist es zweckmäßig, die Rastlage des Klinkenhebels so zu wählen, dass das zweite Ende des Koppelglieds in der Ruhestellung nahe der Totlagengeraden liegt, da in dieser Position der Abstand zwischen dem Klinkenhebel-Schwenklager und dem ersten Ende des Koppelglieds bzw. dem Ende der Kolbenstange maximal ist und der Schwingarm entsprechend maximal von der dritten Schiene entfernt ist.

Zum Entklinken ist ein Entklinkungszylinder vorgesehen, welcher ebenfalls eine Kolben-Zylinder-Einheit ist. Der Kolben des Entklinkungszylinders kann zum Entklinken auf den Klinkenhebel drücken, so dass das zweite Ende des Koppelglieds die Totlagengerade gegen die Federkraft der Klinkenfeder durchfährt. Wenn die Totlage durchschritten ist, wird der Schwingarm mit dem Schleifschuh unter dem Einfluss der wesentlich stärkeren Hauptfeder gegen die dritte Schiene gepresst, d.h. in die Arbeitsstellung verlagert. Je nach Angriffspunkt der Hauptfeder an dem Schwingarm kann diese auf Zug oder auf Druck wirken. Vorteilhafterweise handelt es sich bei der Hauptfeder um eine Schraubenfeder die auf Zug wirkt. Eine zusätzliche Rückstellkraft wird durch eine der Kolben-Zylinder-Einheit zugeordnete Rückstellfeder aufgebracht. Es ist bei dem erfindungsgemäßen Stromabnehmer ausreichend, eine einfach wirkende Kolben-Zylinder-Einheit einzusetzen.

In der Ausführungsform des Patentanspruchs 2 ist der Klinkenhebel mittels einer lösbar oder unlösbar mit dem Klinkenhebel verbundenen Klinkenstange manuell verschwenkbar. Die manuelle Verschwenkbarkeit ist wichtig, falls das Druckmedium für die Kolben-Zylinder-Einheit, insbesondere Druckluft, nicht zur Verfügung steht. Auch in diesem Fall muss es möglich sein, den Schwingarm mit dem Schleifschuh von der Arbeitsstellung in die Ruhestellung zu verschwenken. Da dieses manuelle Verschwenken eine Ausnahmesituation ist, soll die Klinkenstange vorzugsweise lösbar mit dem Klinkenhebel verbunden sein. Hierzu ist in der Ausführungsform des Patentanspruchs 3 im Klinkenhebel-Schwenklager eine Profilierung zum verdrehfesten und lösbaren Koppeln mit der Klinkenstange vorgesehen. Die Profilierung kann insbesondere ein Mehrkant, im einfachsten Fall ein Dreikant oder Vierkant sein.

Bei dem erfindungsgemäßen Stromabnehmer kann die Kolben-Zylinder-Einheit derart gestaltet sein, dass die Kolbenstange den Zylinder vollständig durchsetzt und an beiden Enden aus dem Zylinder herausragt (Patentanspruch 4). Bei dieser Konstellation kann das dem Koppelglied abgewandte freie Ende der Kolbenstange zum Verlagern des Schwingarms von der Arbeitsposition in die Ruheposition ohne Zwischenschaltung weiterer Getriebeglieder unmittelbar auf den Schwingarm drücken. Um den Abstand des freien Endes der Kolbenstange von dem Schwingarm in gewissen Grenzen einstellen zu können, kann an dem freien Ende der Kolbenstange ein Druckstück vorgesehen sein, das beispielsweise über eine Gewindepaarung mit der Kolbenstange verbunden ist. Über die Gewindepaarung kann die Ausfahrlänge der Kolbenstange vergrößert oder verkleinert werden. Zusätzlich kann an dem Schwingarm ein Sockelteil vorgesehen sein, auf das das freie Ende der Kolbenstange bzw. das Druckstück drückt. Auch die Länge des Sockelteils kann einstellbar sein.

In der Ausführungsform des Patentanspruchs 6 ist die Klinkenfeder eine Schraubendrehfeder, die im Klinkenhebel-Schwenklager angeordnet ist. Schraubendrehfedern oder Schenkelfedern sind besonders bauraumsparend und können bei Anordnung am Klinkenhebel-Schwenklager unmittelbar auf der Schwenkachse angeordnet sein. Ein Schenkel der Schraubendrehfeder kann bei dieser Anordnung an dem Klinkenhebel abgestützt sein, während sich ein anderer Schenkel der Schraubendrehfeder an dem Grundrahmen abstützt. Zusätzliche Befestigungsmittel für die Positionierung der Schraubendrehfeder sind nicht erforderlich.

In der Ausführungsform des Patentanspruchs 7 ist die Klinkenfeder eine Zug- oder Druckfeder, insbesondere eine zylindrische Schraubenfeder, die auf Zug oder Druck wirkt. Die Zug- oder Druckfeder soll ebenfalls den Klinkhebel über die Totlagengerade ziehen bzw. drücken. Hierzu kann die Zug- oder Druckfeder mit ihrem einen Ende an dem Grunderahmen abgestützt sein, während ihr zweites Ende entweder an dem Klinkenhebel oder an dem Koppelglied befestigt ist.

Die Erfindung wird nachfolgend anhand eines in den Zeichnungen dargestellten Ausführungsbeispiels näher erläutert. Es zeigen:
- Figuren 1 bis 3: den erfindungsgemäßen Stromabnehmer jeweils in der Seitenansicht, zunächst in der Arbeitsstellung, mit an der dritten Schiene anliegendem Schleifschuh, dann mit nach oben verlagertem Schwingarm in einer Stromschienenlücke und schließlich mit abgesenktem Schwingarm in der Ruhestellung;
- Figur 4: den Stromabnehmer in der Arbeitsstellung der Figur 1 in der Frontansicht;
- Figur 5: den Stromabnehmer in der Ruheposition gemäß Figur 3 in der Frontansicht und
- Figur 6: eine Ausführungsform eines Stromabnehmers in der Darstellung wie Figur 3, bei welchem die Schraubendrehfeder durch eine Zugfeder ersetzt ist.

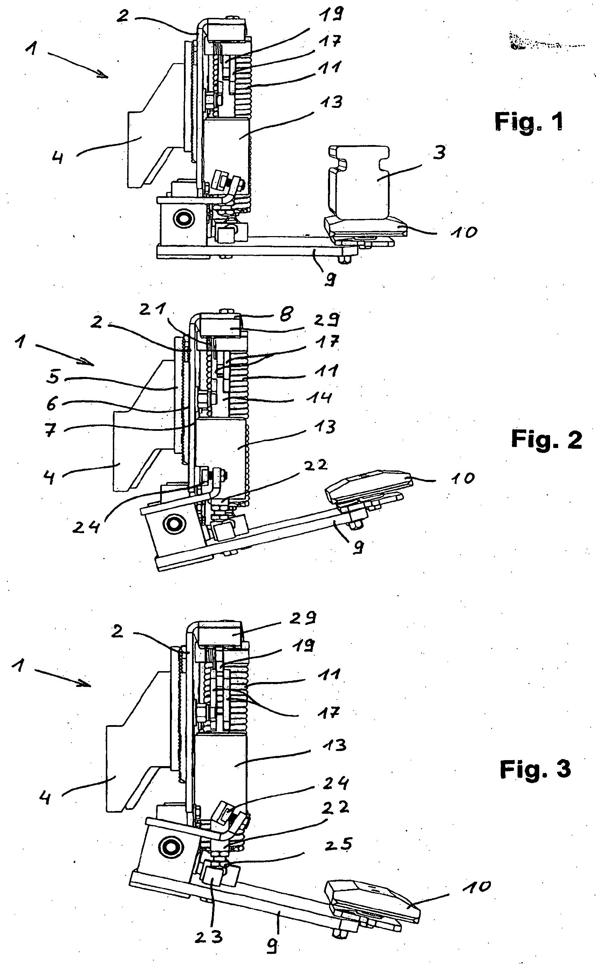

Die Figuren 1 bis 5 zeigen eine einzige Ausführungsform eines Stromabnehmers 1 in unterschiedlichen Ansichten und mit unterschiedlichen Positionen des Schwingarms.

Der dargestellte Stromabnehmer 1 besitzt einen L-förmig konfigurierten Grundrahmen 2, an welchem die Funktionskomponenten des Stromabnehmers 1 befestigt sind. Der Grundrahmen 2 ist auf seiner der dritten Schiene 3 abgewandten Seite über zwei Halter 4 an einem nicht näher dargestellten Schienenfahrzeug befestigt. Über Zahnleisten 5 und Gegenzahnleisten 6 zwischen Halter 4 und Grundrahmen 2 ist eine Höhenverstellung des Grundrahmens 2 gegenüber dem Schienenfahrzeug möglich. Der vertikal verlaufende Schenkel 7 des Grundrahmens ist an seinem oberen Ende abgewinkelt. Es schließt sich ein kürzer ausgeführter horizontaler Schenkel 8 an. Am unteren Ende des vertikalen Schenkels 7 ist der Schwingarm 9 an dem Grundrahmen 2 angelenkt. Der Schwingarm 9 besteht aus einem elektrisch isolierenden Material und ist plattenförmig konfiguriert. An dem freien Ende des Schwingarms 9 ist ein Schleifschuh 10 befestigt, der von unten gegen die dritte Schiene 3 gedrückt wird. Die erforderliche Andruckkraft wird von einer Hauptfeder 11 aufgebracht, die in der Bildebene senkrecht orientiert zwischen dem horizontal verlaufenden Schenkel 8 und dem Schwingarm 9 verspannt ist. Über Spannmittel 12 ist die Federvorspannung der Hauptfeder 11 einstellbar. Die Hauptfeder 11 ist an dem Schwingarm 9 schwenkbeweglich befestigt.

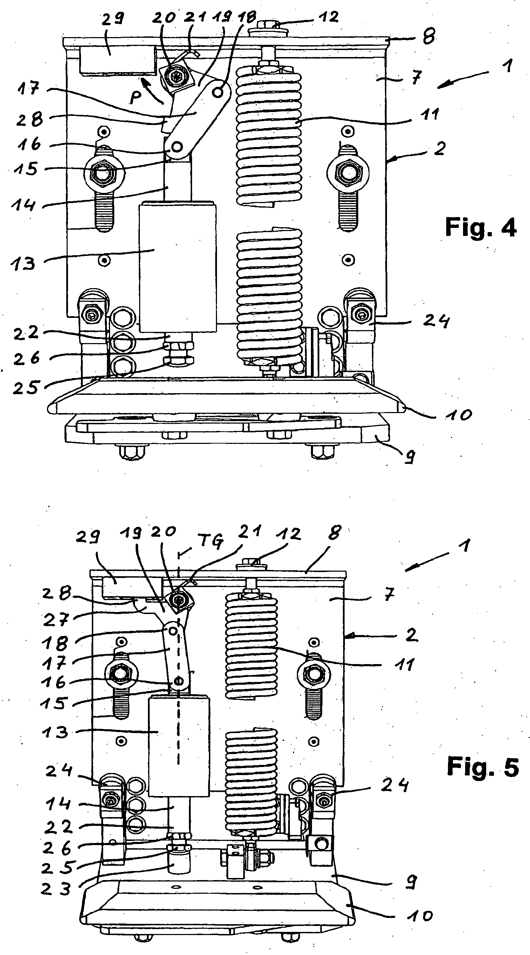

Parallel zu der Wirkrichtung der Hauptfeder 11 ist eine Kolben-Zylinder-Einheit 13 auf der gleichen Seite des Grundrahmens 2 angeordnet. Die Hubrichtung der Kolbenstange 14 verläuft parallel zu der Wirkrichtung der Hauptfeder 11. Das obere Ende 15 der Kolbenstange 14 ist mit dem ersten Ende 16 eines Koppelglieds 17 verbunden, das in diesem Ausführungsbeispiel aus zwei parallel zueinander verlaufenden Streben besteht (Figuren 1 bis 3). Das zweite Ende 18 des Koppelglieds 17 ist schwenkbeweglich mit einem Klinkenhebel 19 verbunden, der in einem Klinkenhebel-Schwenklager 20 schwenkbeweglich an dem vertikal verlaufenden Schenkel 7 des Grundrahmens 2 gelagert ist. Im Bereich des Klinkenhebel-Schwenklagers 20 ist eine Klinkfeder 21 in Form einer Schraubendrehfeder angeordnet, die eine in Richtung des eingezeichneten Pfeils P wirkende Federkraft auf den Klinkenhebel 19 ausübt. Die Federkraft P der Klinkfeder 21 ist wesentlich kleiner als die Federkraft der Hauptfeder 11. Die Federkraft P der Klinkfeder 21 ist auch kleiner als die Federkraft einer nicht näher dargestellten Rückstellfeder der Kolben-Zylinder-Einheit 13. Durch diese Rückstellfeder wird der Klinkenhebel 19 bzw. die Kolbenstange 14 in der in Figur 4 dargestellten Position gehalten. Dies ist wichtig, da die Arbeitspositionen gemäß den Figuren 1, 2 und 4 grundsätzlich einen hinreichenden Schwenkbereich für den Schwingarm ermöglichen müssen. Selbst in der in Figur 2 dargestellten oberen Lage des Schleifschuhs 10 bzw. Schwingarms 9 liegt das untere dem Koppelglied 17 abgewandte freie Ende 22 der Kolbenstange 14 nicht an dem Sockelteil 23 des Schwingarms 9 an, sondern er befindet sich im Abstand hierzu. Die maximale Auslenkung des Schwingarms 9 kann über einen einstellbaren und gepufferten Anschlag 24 justiert werden. Der Anschlag 24 stützt sich auf der dem Schleifschuh 10 zugewandten Seite des Grundrahmens 2 ab. Das freie Ende 22 der Kolbenstange 14 ist mit einem Druckstück 25 versehen, das in das freie Ende 22 eingeschraubt ist und über eine Kontermutter 26 gesichert ist. Das Druckstück 25 bildet quasi die Spitze der Kolbenstange 14. Das Druckstück 25 ist stirnseitig abgerundet ausgeführt.

Wesentlicher Bestandteil des erfindungsgemäßen Stromabnehmers ist die mit der Kolben-Zylinder-Einheit 13 verbundene Rastvorrichtung mit dem Klinkenhebel 19 als zentralen Bauteil. Bei der getriebetechnischen Auslegung ist wichtig, dass das erste Ende des Koppelglieds in der Ruhestellung des Schwingarms 9, wie sie in Figur 5 dargestellt ist, die eingezeichnete Totlagengerade TG durchfährt. In dieser Lage liegt eine an einem zweiten Arm 27 des Klinkenhebels 19 angeordnete Klinke 28 an einem Entklinkungszylinder 29 an, der an dem oberen Schenkel 8 des Grundrahmens 2 befestigt ist. Diese Ruhelage wird auch dann beibehalten, wenn die Kolben-Zylinder-Einheit 13 nicht mit Druckluft beaufschlagt ist. Dadurch dass die Totlage durchschritten ist, zieht die Hauptfeder 11 den Schwingarm 9 gegen die Kolbenstange 14 und diese presst über das Koppelglied 17 die Klinke 28 gegen den Entklinkungszylinder 29. Zum Entklinken kann ein nicht näher dargestellter Kolben des Entklinkungszylinders 29 in der Bildebene der Figuren 4 und 5 nach unten ausfahren, so dass die Klinke 28 nach unten verlagert, der Klinkenhebel 19 in der Bildebene der Figur 5 gegen den Uhrzeigersinn verschwenkt und das zweite Ende 18 des Koppelglieds 17 durch die Totlagengerade TG hindurch nach rechts verschwenkt wird. Die Hauptfeder 11 zieht dann das zweite Ende 18 des Koppelglieds 17 weiter gegen Uhrzeigersinn nach oben. Dadurch wird die Kolbenstange 14 in die in den Figuren 1, 2 und 4 dargestellte Lage verbracht, so dass der Schwingarm 9 frei schwingen kann, das heißt er befindet sich in der Arbeitsstellung.

Optional kann auf das Klinkenhebel-Schwenklager 20 eine nicht näher dargestellte Klinkenstange gesteckt werden. Hierzu besitzt das Klinkenhebelschwenklager 20 eine Vierkantprofilierung, auf die ein gegengleich ausgebildeter Aufsteckbereich der Klinkenstange gesteckt werden kann. Über einen entsprechenden Hebelarm der Klinkenstange kann der Schwenkarm 9 sowohl abgesenkt werden als auch entriegelt werden.

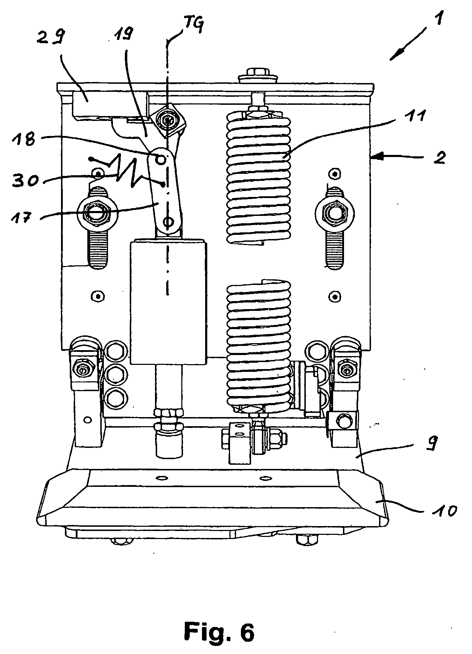

Die Ausführungsform der Figur 6 unterscheidet sich von derjenigen der Figuren 1 bis 5 lediglich dadurch, dass die Klinkfeder durch eine Zugfeder 30 ersetzt ist, die einerseits an dem Grundrahmen 2 und andererseits an dem Koppelglied 17 befestigt ist. Die Zugfeder 30 ist lediglich schematisch angedeutet und hat ebenso wie die Schraubendrehfeder den Zweck, das obere Ende 18 des Koppelglieds 17 den Klinkenhebel 19 durch die Totlagengerade TG zu ziehen. Der Einfachheit halber wurden alle weiteren Bauteile mit den gleichen Bezugszeichen versehen wie bei der Ausführungsform der Figuren 1 bis 5.

### Bezungzeichenaufstellung

- 1 -: Stromabnehmer
- 2 -: Grundrahmen v. 1
- 3 -: dritte Schiene
- 4 -: Halter
- 5 -: Zahnleiste
- 6 -: Gegenzahnleiste
- 7 -: Vertikalschenkel v. 2
- 8 -: Horizontalschenkel v. 2
- 9 -: Schwingarm an 7
- 10 -: Schleifschuh
- 11 -: Hauptfeder
- 12 -: Spannmittel
- 13 -: Kolben-Zylinder-Einheit
- 14 -: Kolbenstange v. 13
- 15 -: Ende v. 14
- 16 -: erstes Ende v. 17
- 17 -: Koppelglied
- 18 -: zweites Ende v. 17
- 19 -: Klinkenhebel
- 20 -: Klinkenhebel-Schwenklager
- 21 -: Klinkfeder/Schraubendrehfeder
- 22 -: freies Ende v. 14
- 23 -: Sockelteil an 9
- 24 -: Anschlag v. 9
- 25 -: Druckstück an 22
- 26 -: Kontermutter v. 25
- 27 -: Arm v. 17
- 28 -: Klinke an 27
- 29 -: Entklinkungszylinder
- 30 -: Klinkfeder/Schraubenzugfeder

- P -: Pfeil
- TG -: Totlagengerade zw. 16 u. 20

## Patentansprüche

1. Stromabnehmer für eine dritte Schiene an Schienenfahrzeugen mit einem an einem Schwingarm (9) befestigten Schleifschuh (10), wobei der schwenkbar gelagerte Schwingarm (9) mittels einer Kolben-Zylinder-Einheit (13) von einer Arbeitsstellung in eine Ruhestellung verschwenkbar und in dieser verrastbar ist, **dadurch gekennzeichnet, dass** die Kolbenstange (14) der Kolben-Zylinder-Einheit (13) mit einem ersten Ende (16) eines Koppelglieds (17) verbunden ist, dessen zweites Ende (28) schwenkbeweglich mit einem Klinkenhebel (19) verbunden ist, der wiederum an einem Klinkenhebel-Schwenklager (20) eines Grundrahmens (2) des Stromabnehmers (1) gelagert ist und durch die Federkraft (P) einer Klinkfeder (21, 30) in der Ruhestellung gehalten ist, wobei eine Klinke (28) des Klinkenhebels (19) in der Ruhestellung an einem Entklinkungszylinder (29) anliegt, welcher den Klinkenhebel (19) zum Entklinken so weit gegen die Federkraft (P) der Klinkfeder (21, 30) verschwenkt, dass das zweite Ende (18) des Koppelglieds (17) eine Totlage durchfährt und von einer den Schwingarm (9) mit dem Schleifschuh (10) gegen die dritte Schiene pressenden Hauptfeder (11) in die Arbeitsstellung verlagert wird.

2. Stromabnehmer nach Anspuch 1, **dadurch gekennzeichnet, dass** der Klinkenhebel (19) mittels einer lösbar mit dem Klinkenhebel (19) verbindbaren Klinkenstange manuell verschwenkbar ist.

3. Stromabnehmer nach Anspruch 2, **dadurch gekennzeichnet, dass** der Klinkenhebel (19) im Klinkenhebel-Schwenklager (20) eine Profilierung zur verdrehfesten und lösbaren Kopplung mit der Klinkenstange besitzt.

4. Stromabnehmer nach einem der Ansprüche 1 bis 3, **dadurch gekennzeichnet, dass** die Kolbenstange (14) der Kolben-Zylinder-Einheit (13) den Zylinder vollständig durchsetzt, wobei deren dem Koppelglied (17) abgewandtes freies Ende (22) zum Verlagern des Schwingarms (9) von der Arbeitsposition in die Ruheposition ohne Zwischenschaltung weiterer Getriebeglieder unmittelbar auf den Schwingarm (9) drückt.

5. Stromabnehmer nach einem der Ansprüche 1 bis 4, **dadurch gekennzeichnet, dass** das freie Ende (22) der Kolbenstange (24) auf ein Sockelteil (23) des Schwingarms (9) drückt.

6. Stromabnehmer nach einem der Ansprüche 1 bis 5, **dadurch gekennzeichnet, dass** die Klinkfeder (21) eine Schraubendrehfeder ist, die im Klinkenhebel-Schwenklager (20) angeordnet ist.

7. Stromabnehmer nach einem der Ansprüche 1 bis 5, **dadurch gekennzeichnet, dass** die Klinkfeder (30) eine Zug- oder Druckfeder ist.

## Claims

1. Current collector for a third rail for rail vehicles with a collecting shoe (10) mounted on a connecting rod (9), wherein the connecting rod (9) can be pivoted from an operating position into a resting position by means of a piston-cylinder unit (13) and can be locked in this position, **characterised in that** the piston rod (14) of the piston-cylinder unit (13) is connected to a first end (16) of a coupling element (17), whose second end (28) is pivotally connected to a pawl lever (19), which in turn is mounted on a pawl lever pivot bearing (20) of a base frame (2) of the current collector (1), and is held in the resting position by the spring force (P) of a pawl spring (21, 30), wherein a pawl (28) of the pawl lever (19) lies against a pawl unlatching cylinder (29) in the resting position, and wherein the pawl lever (19) is pivoted so far against the spring force (P) of the pawl spring (21, 30) for unlocking, that the second end (18) of the coupling element (17) passes through a dead point and is displaced into the operating position by a main spring (11) pressing the connecting rod (9) with the collecting shoe (10) against the third rail.

2. Current collector according to 1, **characterised in that** the pawl lever (19) is manually pivotable by means of a pawl bar releasably connected to the pawl lever (19).

3. Current collector according to claim 2, **characterised in that** the pawl lever (19) in the pawl lever pivot bearing (20) has a profiling for rotationally fixed and releasable coupling with the pawl bar.

4. Current collector according to one of the claims 1 to 3, **characterised in that** the piston rod (14) of the piston-cylinder unit (13) passes completely through the cylinder, wherein the coupling element (17) remote from the free end (22) for displacing the connecting rod (9) from the operating position to the resting position, presses directly on the connecting rod (9) without the interposition of further transmission elements.

5. Current collector according to any one of the claims 1 to 4, **characterised in that** the free end (22) of the piston rod (24) presses on a base part (23) of the connecting rod (9).

6. Current collector according to any one of the claims 1 to 5, **characterised in that** the pawl spring (21) is a helical torsion spring, which is arranged in the pawl lever pivot bearing (20).

7. Current collector according to one of the claims 1 to 5, **characterised in that** the pawl spring (30) is a tension or compression spring.

## Revendications

1. Pantographe destiné à un troisième rail au niveau de véhicules sur rails comprenant un patin (10) fixé au niveau d'un bras oscillant (9), le bras oscillant (9) monté de manière à pouvoir pivoter pouvant pivoter au moyen d'une unité piston-cylindre (13) depuis une position de travail dans une position de repos et pouvant être enclenché dans celle-ci, **caractérisé en ce que** la tige de piston (14) de l'unité piston-cylindre (13) est reliée à une première extrémité (16) d'un organe de couplage (17), dont la deuxième extrémité (28) est reliée de manière mobile en pivotement à un levier à cliquet (19), qui est monté à son tour au niveau d'un palier de pivotement pour levier à cliquet (20) d'un cadre de base (2) du pantographe (1) et qui est maintenu par la force élastique (P) d'un ressort de cliquet (21, 30) dans la position de repos, un cliquet (28) du levier à cliquet (19) reposant dans la position de repos au niveau d'un cylindre de décliquetage (29), qui fait pivoter le levier à cliquet (19) aux fins du décliquetage à l'encontre de la force élastique (P) du ressort de cliquet (21, 30) si loin que la deuxième extrémité (18) de l'organe de couplage (17) passe par une position de point mort et est déplacée dans la position de travail par un ressort principal (11) pressant le bras oscillant (9) avec le patin (10) contre le troisième rail.

2. Pantographe selon la revendication 1, **caractérisé en ce que** le levier de cliquet (19) peut pivoter manuellement au moyen d'une tige de cliquet pouvant être reliée de manière amovible au levier de cliquet (19).

3. Pantographe selon la revendication 2, **caractérisé en ce que** le levier de cliquet (19) dans le palier de pivotement pour levier à cliquet (20) présente un profilage servant à coupler de manière à résister à une torsion et de manière amovible à la tige de cliquet.

4. Pantographe selon l'une quelconque des revendications 1 à 3, **caractérisé en ce que** la tige de piston (14) de l'unité piston-cylindre (13) traverse intégralement le cylindre, l'extrémité libre (22) opposée à l'organe de couplage (17) de ladite tige de piston exerçant une pression directement sur le bras oscillant (9) afin de déplacer le bras oscillant (9) de la position de travail dans la position de repos sans intercaler des organes de transmission supplémentaires.

5. Pantographe selon l'une quelconque des revendications 1 à 4, **caractérisé en ce que** l'extrémité libre (22) de la tige de piston (24) exerce une pression sur une partie formant socle (23) du bras oscillant (9).

6. Pantographe selon l'une quelconque des revendications 1 à 5, **caractérisé en ce que** le ressort de cliquet (21) est un ressort à boudin, qui est disposé dans le palier de pivotement pour levier à cliquet (20).

7. Pantographe selon l'une quelconque des revendications 1 à 5, **caractérisé en ce que** le ressort de cliquet (30) est un ressort de traction ou un ressort de pression.
